# EUROPÄISCHE PATENTSCHRIFT

(11) **EP 0 395 823 B1**
(45) Veröffentlichungstag und Bekanntmachung des Hinweises auf die Patenterteilung: **09.06.1993**
(21) Anmeldenummer: 89730060.4
(22) Anmeldetag: 07.03.1989
(51) Int. Cl.: B29C 47/02, G02B 6/44

(54) **Verfahren und Vorrichtung zur Ummantelung eines Lichtleiters für optische und/oder elektrische Kabel**
Method and device for sheathing a light guide for optical and/or electrical cables
Procédé et dispositif de gainage d'un guide lumière pour câble optique et/ou électrique

(43) Veröffentlichungstag der Anmeldung: 07.11.1990
(73) Patentinhaber: SIEMENS AKTIENGESELLSCHAFT, 80333 München (DE)
(72) Erfinder: Brüggemann, Ottmar, Dipl.-Ing., D-1000 Berlin 21 (DE)

(56) Entgegenhaltungen:
- EP-A- 0 162 471
- EP-A- 0 188 939
- EP-A- 0 190 522
- DE-A- 3 226 265
- US-A- 3 239 884
- US-A- 3 773 449

## Beschreibung

Die Erfindung liegt auf dem Gebiet der Herstellung optischer Elemente und ist bei der Herstellung der Ummantelung optischer Adern anzuwenden, die einen Lichtleiter aus Kunststoff aufweisen und zur Verwendung in optischen und/oder elektrischen Kabeln vorgesehen sind.

Bekannte optische Kabel, die der Nachrichtenübertragung dienen, enthalten eine oder mehrere optische Adern, in der Regel solche mit einem Lichtleiter aus Glas. Es ist auch bekannt, optische Adern in Kabeln und Leitungen für Energieübertragungszwecke zu verwenden, um zusätzlich zur Energie Informationen übertragen zu können. Eine bekannte Leitung dieser Art enthält drei elektrische Adern und eine optische Ader, die in dem Innenzwickel oder dem Außenzwickel oder auch anstelle eines Kupferleiters angeordnet sein kann. Die als "Lichtwellenleiter" bezeichnete optische Ader besteht aus einer Glas- oder Kunststoffaser, die beispielsweise mit einer elastischen Umhüllung aus einem Wollgespinst umgeben ist (DE-A-32 26 265).

Optische Adern mit einem Lichtleiter aus Kunststoff und demzufolge mit einer relativ hohen Dämpfung im Vergleich zu optischen Adern mit einem Lichtleiter aus Glas eigenen sich besonders zur Verwendung in elektrischen Kabeln und Leitungen, weil diese oft nur kurze Entfernungen bis zu einigen hundert Metern überbrücken. Solche optischen Adern bestehen aus den eigentlichen lichtleitenden Schichten, nämlich einer optischen Kernschicht und einer optischen Mantelschicht, und aus einer Schutzhülle. Die Schutzhülle, auch Ummantelung genannt, kann aus einem thermoplastischen Kunststoff wie Polyamid, Polyäthylen oder Polyvinylchlorid mit einer Wandstärke von etwa 0,25 mm bestehen. Diese drei Schichten werden üblicherweise nach Art eines Spinnprozesses aus der Schmelze hergestellt (EP-A-0 162 471, US-C-4 593 974).

Ausgehend von einem Verfahren mit den Merkmalen des Oberbegriffes des Anspruches 1 und von einer Vorrichtung mit den Merkmalen des Oberbegriffes des Anspruches 5 liegt der Erfindung die Aufgabe zugrunde, zur Herstellung eines ummantelten Lichtleiters eine Fertigungstechnik anzugeben, die es ermöglicht, Ummantelungen aus unterschiedlichsten thermoplastischen Werkstoffen herzustellen, um der Ummantelung der optischen Ader gezielt spezielle physikalische und/oder chemische Eigenschaften geben zu können.

Zur Lösung dieser Aufgabe ist gemäß der Erfindung verfahrenstechnisch vorgesehen, daß die Ummantelung des Lichtleiters durch Extrusion des thermoplastischen Kunststoffes im Durchlaufverfahren erfolgt und daß der Lichtleiter vor dem Aufbringen der Ummantelung auf eine Temperatur von -20 bis -50 °C abgekühlt wird. Bezüglich einer geeigneten Vorrichtung zur Durchführung dieses Verfahrens ist weiterhin vorgesehen, daß vor der Auftragvorrichtung eine Ablaufeinrichtung für den Lichtleiter angeordnet ist, daß die Auftragvorrichtung aus einem Extruder besteht, daß unmittelbar vor dem Spritzkopf des Extruders eine auf den Lichtleiter einwirkende Kühlvorrichtung angeordnet ist und daß der Bereich zwischen der Austrittsöffnung der Kühlvorrichtung und der Eintrittsöffnung des Extruderspritzkopfes mittels einer Wanne überbrückt ist.

Die Erfindung geht von der Erkenntnis aus, daß Lichtleiter aus Kunststoff, wenn man sie mit Hilfe eines Extrusionsprozesses ummanteln will, gegebenenfalls einer zu starken Temperaturbeanspruchung ausgesetzt sind. Die optischen Eigenschaften eines Lichtleiters aus Kunststoff, der in aller Regel aus Polymethylmetacrylat besteht, verschlechtern sich nämlich schon bei Temperaturen von 80 bis 90 °C. Daher zielen die gemäß der Erfindung vorgesehenen fertigungstechnischen Maßnahmen darauf ab, die bei der Ummantelung des Lichtleiters auftretenden Temperaturen, die sich durch Wärmeübertragung aus der Kunststoffschmelze des Mantelmaterials ergeben, in unkritische Bereiche abzusenken. Dies wird dadurch erreicht, daß der Lichtleiter vor seiner Ummantellung durch eine geeignete trockene Vorkühlung auf Temperaturen von -20 bis -50 °C abgekühlt wird. Dies kann kontinuierlich im Durchlaufverfahren erfolgen oder dadurch, daß der Lichtleiter aus einem gekühlten Vorratsbehälter abgezogen wird. Zweckmäßig erfolgt die Abkühlung durch Einwirken von Stickstoff. Für eine kontinuierliche Kühlung des Lichtleiters kann beispielsweise ein handelsübliches Cryogen-Kühlrohr verwendet werden, wie es beispielsweise zum Kühlen von Verbundprofilen oder von Schlauchseelen bekannt ist (DE-Z-"Kunststoffe 77 (1987), Heft 7, Seite 681 bis 684). Um hierbei zu gewährleisten, daß im Übergangsbereich vom Austritt aus dem Kühlrohr bis zum Eintritt in den Spritzkopf des Extruders keine Betauung des Lichtleiters eintritt, ist vorgesehen, diesen Bereich mittels einer Wanne in Form einer halbschalenförmigen Verbindung oder auch mittels einer geschlossenen Wanne, beispielsweise in Form eines Rohres, zu überbrücken. Dadurch wird erreicht, daß der Lichtleiter in dem überbrückten Bereich ständig mit aus dem Kühlrohr ausströmenden gasförmigen Stickstoff umspült wird, wodurch der Zutritt von Umgebungsluft verhindert wird.

Mit einem gemäß der Erfindung ausgebildeten Verfahren und einer gemäß der Erfindung ausgebildeten Vorrichtung ist es somit möglich, Ummantelungen aus unterschiedlichen thermoplastischen Kunststoffen wie Polyurethan, speziellen PVC- oder PE-Sorten und thermoplastischen Elastomeren auf einen Lichtleiter aus Kunststoff aufzubringen. Die Ummantelung kann geschäumt und ungeschäumt oder auch mehrschichtig aufgebaut sein.

Weitere Ausgestaltungen der Erfindung sind durch die gegenstände der unabhängigen Ansprüche definiert.

Ein Ausführungsbeispiel einer Vorrichtung zur Durchführung des neuen Herstellverfahrens ist in Figur 1 schematisch dargestellt. Die Figuren 2 und 3 zeigen zwei Ausführungsbeispiele für die zwischen der Kühlvorrichtung und dem Extruder angeordnete wannenartige Überbrückung.

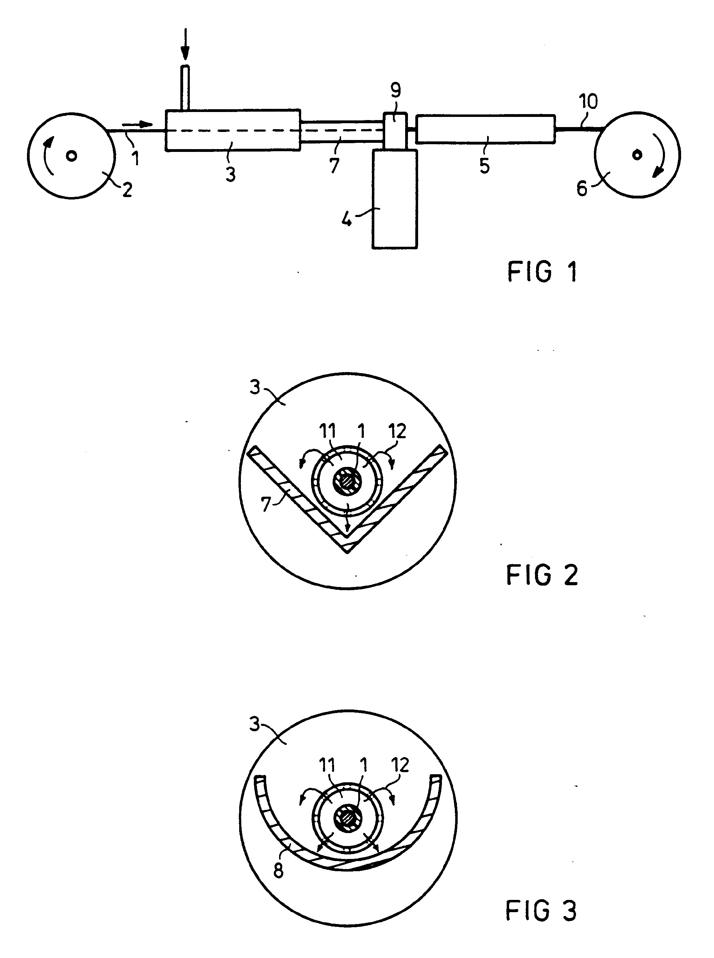

Gemäß Figur 1 läuft ein Lichtleiter 1 aus Kunststoff von einer Vorratsspule 2 ab und wird zunächst durch eine Kühlvorrichtung 3 in Form eines an sich bekannten Kühlrohres geführt. Durchlaufgeschwindigkeit und Kühltemperatur sind so aufeinander abgestimmt, daß der Lichtleiter vor dem Einlaufen in den Spritzkopf des Extruders 4 eine Temperatur von weniger als -20 °C annimmt. Nach dem Aufbringen der Ummantelung durchläuft die optische Ader 10 eine Kühlvorrichtung 5 und wird anschließend mittels der Aufwickelvorrichtung 6 aufgetrommelt. - Der Bereich zwischen der Kühlvorrichtung 3 und dem Spritzkopf 9 des Extruders 4 ist mittels der Wanne 7 überbrückt, die den gekühlten Lichtleiter gegen den Zutritt von warmer Umgebungsluft abschirmt. Diese Wanne kann gemäß Figur 2 aus einem kehlnutartigen Profilstück 7 oder gemäß Figur 3 aus einem längsgeteilten Rohrstück 8 bestehen. Die Wanne 7 bzw. 8 gewährleistet, daß aus der Austrittsöffnung 11 der Kühlvorrichtung 3 austretender gasförmiger Stickstoff 12 den gekühlten Lichtleiter ständig umspült, ohne daß warme Umgebungsluft einen Zutritt zum gekühlten Lichtleiter hat. Dadurch wird verhindert, daß sich Feuchtigkeit auf der Oberfläche des Lichtleiters niederschlagen kann. - Anstelle von Stickstoff kann auch ein anderes geeignetes Kühlmedium verwendet werden, beispielsweise Sauerstoff.

## Patentansprüche

1. Verfahren zur Ummantelung eines Lichtleiters für optische und/oder elektrische Kabel,
bei dem ein Lichtleiter aus Kunststoff mit einer Schicht aus einem thermoplastischem Kunststoff ummantelt wird,
**dadurch gekennzeichnet,**
daß die Ummantelung des Lichtleiters (1) durch Extrusion des thermoplastischen Kunststoffes im Durchlaufverfahren erfolgt und daß der Lichtleiter (1) vor dem Aufbringen der Ummantelung auf eine Temperatur von -20 bis -50 °C abgekühlt (3) wird.

2. Verfahren nach Anspruch 1,
**dadurch gekennzeichnet,** daß der Lichtleiter (1) kontinuierlich im Durchlaufverfahren (3) abgekühlt wird.

3. Verfahren nach Anspruch 1,
**dadurch gekennzeichnet,** daß der Lichtleiter aus einem gekühlten Vorratsbehälter abgezogen wird.

4. Verfahren nach einem der Ansprüche 1 bis 3, **dadurch gekennzeichnet,** daß die Abkühlung durch Einwirkung von Stickstoff erfolgt.

5. Vorrichtung zur Durchführung des Verfahrens nach Anspruch 1, bestehend aus einer Auftragvorrichtung für die Ummantelung und einer Aufwickelvorrichtung (6) für den ummantelten Lichtleiter (1), **dadurch gekennzeichnet,**
daß vor der Auftragsvorrichtung eine Ablaufeinrichtung für den Lichtleiter (1) angeordnet ist, daß die Auftragvorrichtung aus einem Extruder (4) besteht, daß unmittelbar vor dem Spritzkopf (9) des Extruders (4) eine auf den Lichtleiter (1) einwirkende Kühlvorrichtung (3) angeordnet ist und daß der Bereich zwischen der Austrittsöffnung der Kühlvorrichtung (3) und der Eintrittsöffnung des Extruderspritzkopfes (9) mittels einer Wanne (7) überbrückt ist.

6. Vorrichtung nach Anspruch 5,
**dadurch gekennzeichnet,** daß die Wanne aus einem längsgeteilten Hohlprofilstück (8) besteht.

## Claims

1. A method for sheathing a light guide for optical and/or electric cables, in which method a plastic light guide is covered with a layer of thermoplastic plastics material,
characterised in that the sheathing of the light guide (1) occurs through extrusion of the thermoplastic plastics material in a continuous operation and in that the light guide (1) is cooled down to a temperature of -20 to -50°C before applying the sheathing.

2. A method according to claim 1,
characterised in that the light guide (1) is cooled continuously in continuous operation (3).

3. A method according to claim 1,
characterised in that the light guide is removed from a cooled storage container.

4. A method according to one of claims 1 to 3, characterised in that the cooling occurs by the effect of nitrogen.

5. A device for carrying out the method according to claim 1, consisting of an application device for the sheathing and a take-up device (6) for the covered light guide (1), characterised in that arranged in front of the application device there is a delivery device for the light guide (1), in that the application device consists of an extruder (4), in that arranged directly in front of the die (9) of the extruder (4) there is a cooling device (3) acting on the light guide (1), and in that the region between the exit opening of the cooling device (3) and the inlet opening of the extruding die head (9) is bridged by a trough (7).

6. A device according to claim 5, characterised in that the trough consists of a longitudinally divided hollow profile piece (8).

## Revendications

1. Procédé de gainage d'un guide de lumière pour des câbles optiques et/ou électriques,
selon lequel on enveloppe un guide de lumière en matière plastique, d'une couche formée d'une matière thermoplastique, caractérisé par le fait
que le gainage du guide de lumière (1) s'effectue par extrusion de la matière thermoplastique selon le procédé de traitement continu et qu'avant le dépôt de la gaine, on refroidit (3) le guide de lumière (1) à une température de -20 à - 50°C.

2. Procédé selon la revendication 1, caractérisé par le fait qu'on refroidit continûment le guide de lumière (1) selon le procédé de traitement continu (3).

3. Procédé suivant la revendication 1, caractérisé par le fait qu'on tire le guide de lumière à partir d'un réservoir refroidi.

4. Procédé suivant l'une des revendications 1 à 3, caractérisé par le fait qu'on exécute le refroidissement en faisant agir de l'azote.

5. Dispositif pour la mise en oeuvre du procédé suivant la revendication 1, constitué par un dispositif de dépôt pour réaliser le gainage et par un dispositif d'enroulement (6) pour le guide de lumière gainé (1), caractérisé par le fait qu'en amont du dispositif de dépôt est agencé un dispositif de circulation pour le guide de lumière (1), que le dispositif de dépôt est constitué par une extrudeuse (4), qu'un dispositif de refroidissement (3) agissant sur le guide de lumière (1) est disposé directement en amont de la tête d'injection (9) de l'extrudeuse (4) et que la zone située entre l'ouverture de sortie du dispositif de refroidissement (3) et l'ouverture d'entrée de la tête d'injection ou filière (9) de l'extrudeuse est occupée par une cuvette (6).

6. Dispositif suivant la revendication 5, caractérisé par le fait que la cuvette est constituée par une pièce profilée creuse (8) subdivisée longitudinalement.
